# EUROPEAN PATENT SPECIFICATION

(11) **EP 0 790 854 B1**
(45) Date of publication and mention of the grant of the patent: **28.02.2001**
(21) Application number: 95936642.8
(22) Date of filing: 10.11.1995
(51) Int. Cl.: B01D 53/04

(54) **Unit and process for temperature swing adsorption**
Vorrichtung und Verfahren zur Temparaturwechsel Adsorption
Unité et procédé pour l'adsorption à température alternée

(30) Priority: 11.11.1994 GB 9422835
(43) Date of publication of application: 27.08.1997
(73) Proprietor: THE SECRETARY OF STATE FOR DEFENCE, Farnborough, Hampshire GU14 6TD (GB)
(72) Inventor: HOLMES, Richard, James, Salisbury Wiltshire SP4 0JQ (GB); FRANCIS, David, Clive, Wiltshire SP4 0JQ (GB)
(74) Representative: Skelton, Stephen Richard
(86) International application number: GB9502624
(87) International publication number: WO9614917

(56) References cited:
- DE-C- 549 531
- US-A- 3 193 985

## Description

The present invention relates to a method of separating components from a gaseous mixture by use of temperature swing adsorption and, more particularly, pressure and temperature swing adsorption, and to an improved method and apparatus for enabling regeneration of adsorbent materials in one or more beds for use in gas filtration. Particularly The present invention is concerned with filtering volatile contaminants from oxygen and/or nitrogen containing gas mixtures such as air.

Pressure swing adsorption processes are suited to air separations involving light gases, but not those involving high boiling point components which are strongly adsorbed to the filter bed (see applicant's copending application reference UK 94 22833.5). This limitation can be overcome by using a combination of pressure and temperature swing, as provided using a pressure and temperature swing adsorber (PTSA) bed, using an appropriate adsorbent inventory, where the temperature swing serves to desorb the high boiling point components.

The use of a combined pressure and temperature adsorption stage will minimise the size of the filter bed. A temperature swing adsorption system is however feasible when power and other limitations prevent the use of a compressor device. A filter bed based on temperature swing adsorption (TSA) alone will however be larger than one based on a combination of pressure and temperature.

The present inventors have determined that heating systems to be employed in a PTSA bed of TSA bed for use in such method should possess most or all of the following characteristics: compactness to allow minimal size of adsorber bed; non-intrusiveness in the bed interior giving it the ability to be snow-storm filled; axial positioning to enable layered adsorbents to be used in a single bed whilst preventing fluidisation; intrinsic safety for prevention of bed overheating and thermal ageing; the ability to heat and cool in consistent and reproducible manner to give long term stability; low thermal mass allowing rapid and efficient heating and cooling; efficient and homogeneous axial and radial, transfer to minimise regeneration period such as to generate a rectangular heating and cooling profile; and economical power consumption allowing flexible deployment of the system in mobile equipments.

There are a number of methods available for generating the temperature swing but many of these suffer from one or more limitations. Examples of methods excluded from practical study include microwave systems and direct electrical heating of the adsorber bed. Microwave systems would require a generator and waveguide and would heat the bed in a highly localised fashion. Materials of construction, including the adsorber beds and the adsorbents would be limited by the constraints associated with the use of microwaves resulting in the risk of thermal degradation and combustion of the adsorbents being high. Heat transfer within the bed would rely on interparticle conduction and would therefore be inefficient.

Direct electrical heating would suffer from some of the above limitations including combustion hazards associated with the use of live electrical currents, including current leakage, and the need for stringent electrical isolation of the adsorber beds would increase the complexity of the equipment. In addition the use of this system would limit the choice of adsorbent.

Although both techniques are non-intrusive their use would constrain adsorbent choice. The present inventors have now provided a method for heating such PTSA beds that allows use of commercially available heaters and does not limit the adsorbent in this manner.

Thus in a first aspect of the present invention there is provided a temperature swing adsorption gas filtration unit having a plurality of filter layers in series array and heaters located across the unit adjacent at least some of the filter layers and in supports therefor, and characterised by a heater control device arranged for independent control of the heaters, and by means for directing purging gas through the filters in a sense opposed to that of the subject gas being filtered.

The purge direction will be understood to be the direction of gas flow used when the bed is being regenerated and will conventionally be counter to the flow direction when the bed is being used to separate contaminant or other components desired to be separated from a gas to be treated.

In a preferred embodiment of this aspect of the present invention the unit employs a plurality of layers of adsorbent material within the filtration bed housing and positions a heating means upstream, with respect to the purge flow direction, of each of these layers. Most preferably the heating means are used to separate different adsorbent layers positioned within a single pressure and temperature swing adsorber bed unit, or temperature swing adsorber bed unit, such as the multilayer bed units that are the subject matter of the applicant's copending application (UK 94 22833.5).

In this manner the temperature selected for regeneration of a particular adsorbent material may be matched more closely to its particular characteristics, particularly with regard to its thermal degradation characteristics and the amount of heat required to purge a particular component from a particular layer at a given pressure.

Particularly preferred heaters for the purpose of heating the gas as it enters each layer of a bed are provided in the form of disc shaped heater units located within divider elements which may be used for supporting and in turn being supported by the adsorbent of an adjacent adsorbent material layers. Suitable such heater units are Curie point heaters such as those provided by Domnick Hunter Filters UK, (these being conveniently located in batteries of three heater elements each) or any other arrangement including batteries containing six or more such discs, or elements of different shape.

The heaters are controlled, in the preferred design, using a microprocessor device (there being no need to monitor bed temperature). The microprocessor device allows rapid control of the bed heaters including the provision of sequential shutdown in order to minimise cooling periods required and thus return the bed to operational condition as soon as possible. The electrical connections to the heater batteries and sensors may conveniently be provided entering through the ends of the bed, as will be seen in the Example below. The electrical connections can also be made through the walls of the housing, the housing may also be of different configuration, eg circular, and may use a different heater battery design containing six or more curie point elements, which themselves may be of different shape.

The particular use of batteries of air heaters placed within transverse elements to divide a bed into layers allows placement of heaters at any desired position within the bed. The preferred Curie point heaters are of honeycomb construction and provide direct gas heating during passage of gas through the bed with gas temperature controlled by the composition of the heater element.

In US-A-3 193 985 a regenerable dehumidifier and operating process therefor are described. A vapour laden gas is dehumidified by passage through a bed of granular adsorbent material and the bed is then regenerated by passing first hot then cold moisture containing gas through the bed. The gas is heated by heating means mounted near the outlet side of the bed.

Patent Specification DE-C-O 549 531 discloses a filter device having a plurality of filter layers interspersed with heaters whereby the filter can be regenerated. The heaters are adapted and arranged to heat purging gas which is passed through the filters in a direction opposed to that of the gas being filtered.

The present invention will now be described further by way of illustration only by reference to the following non-limiting Figures and Example. Further embodiments falling within the scope of the claims will occur to those skilled in art in the light of these.

### FIGURES

Figure 1: shows a section view of (i) a conductive coil heated bed and (ii) the coil used as a comparative example.

Figure 2: shows temperature profiles obtained using the coil heater of Figure 1 from thermocouples placed in the bed core or adjacent the housing wall.

Figure 3: shows (i) elevation section and cross section (ii) through a comparative example rod and vane heated bed.

Figure 4: shows temperature profiles obtained using the rod and vane heater of Figure 2 obtained from lower manifold temperature.

Figure 5a: shows a plan view and an elevation of a 3 element Curie point heater showing its dimensions. Figure 5b shows a divider element in which the heater of Figure 5a is placed during operation.

Figure 6: shows the arrangement of four heater units of Figure 5 within a vertically oriented bed such as to divide it into four layers.

Figure 7: shows temperature profiles obtained within a bed of zeolite using a 38.5 dm³ fill at airflow rate 3120 dm³ min⁻¹ at the thermocouples A1 to A6 of Figure 6.

### EXAMPLE 1: Curie point air heater pressure and temperature swing adsorber unit

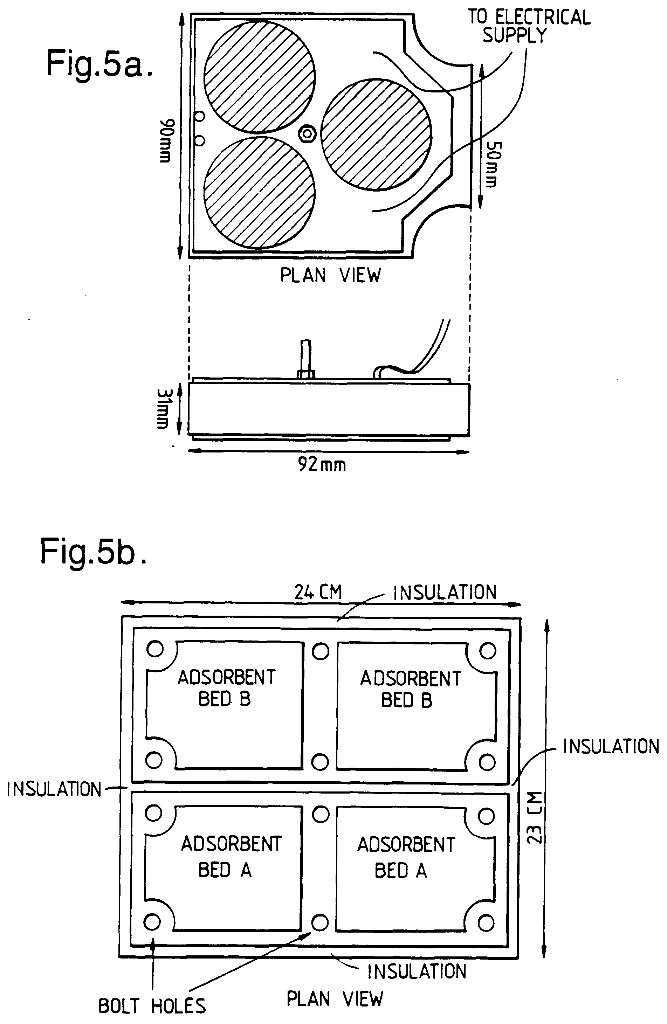

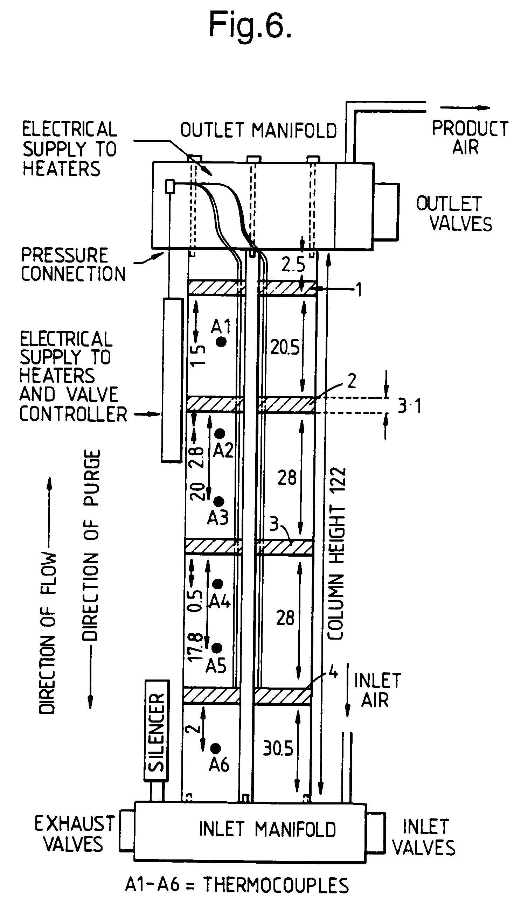

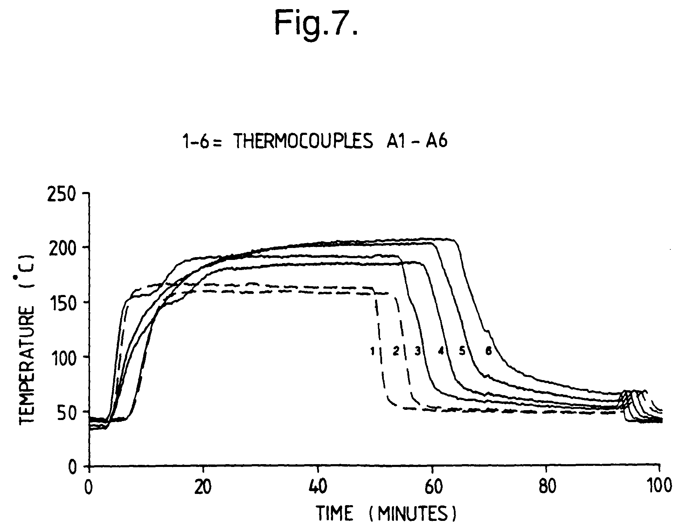

Curie point heaters (three elements per battery, see Figure 5) and housings were supplied by Domnick Hunter Filters Ltd, UK. Referring to Figure 6, four batteries 1 - 4, each independently controlled via a microprocessor keypad timing device, were located axially within a 38.5 dm³ bed of zeolite, electrical connection being made by thin (2mm) insulated wires which passed along the adsorber bed to connectors introduced into an upper manifold via gas tight ducts. The upper and lower manifolds, which formed an integral part of the bed housing, also contained the valving arrangement. Each element was of honeycomb construction and provided direct air heating during passage of gas along the column of the bed unit. Gas temperature was controlled by the composition of the heating element and was approximately 180-210°C. Power consumption was approximately 2kW (eight three element blocks occupying 10% of the housing volume). Typical in-bed temperature profiles during heating and cooling measured using thermocouples shown at positions A1 to A6 are shown in Figure 7 with a gas flow of air at 3120 dm³ min⁻¹. In obtaining these the heater batteries were switched off sequentially.

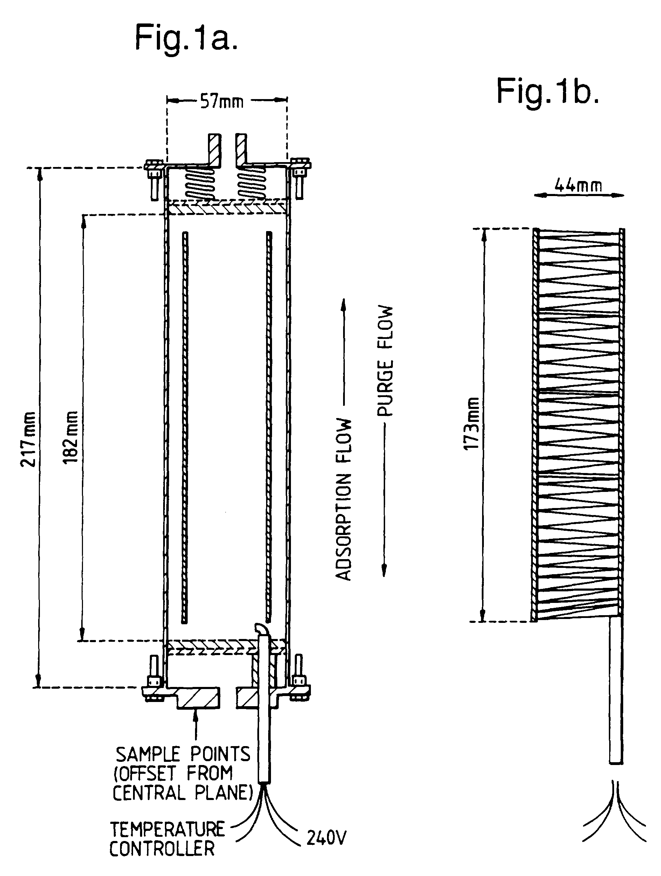

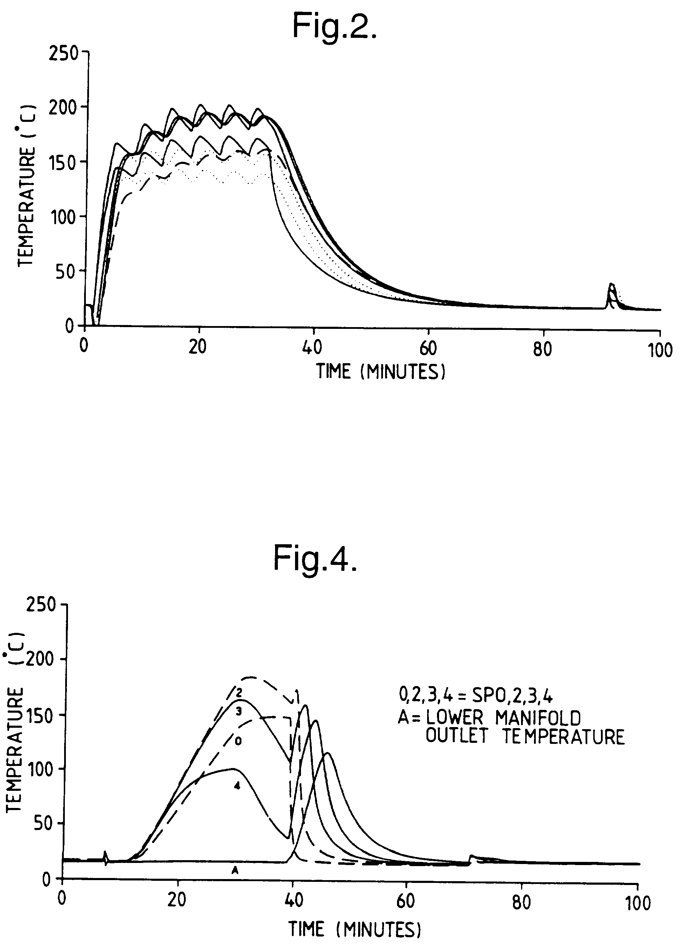

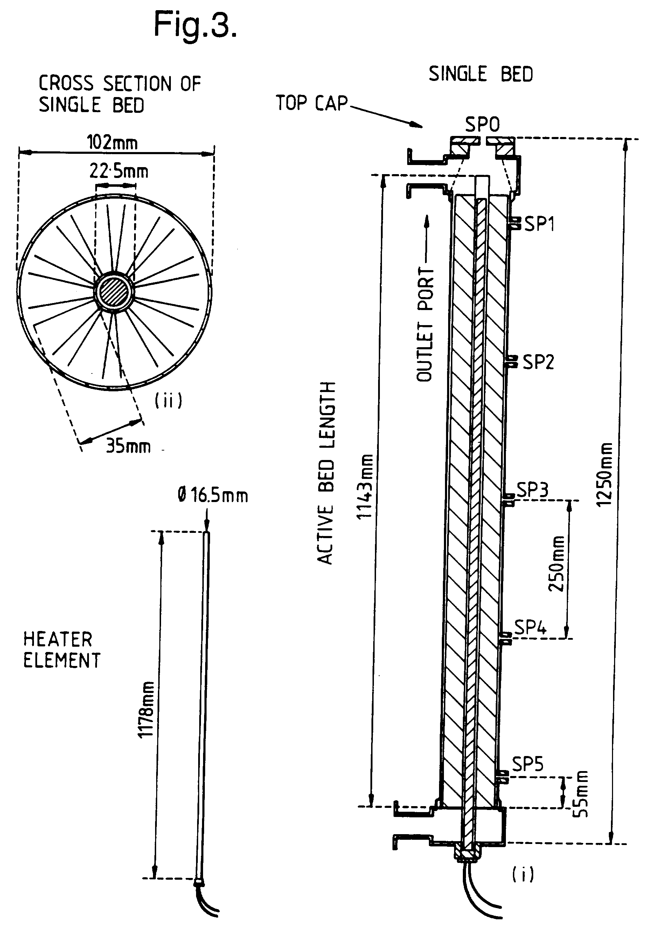

Countercurrent purge flow applied during regeneration was varied with higher flowrates reducing bed temperatures and thus causing more power to be consumed. The temperature profile for the Curie point air heater bed of the invention should be compared with those obtained using a conductive coil heater (Figure 1) and a rod and vane heater (Figure 3). The conductive coil heated bed used a conductive coil electrically connected through the bed housing base with a thermocouple placed close to the element. The element occupied 13% of the housing interior volume and the heater provided 0.6kW to the adsorbent variable by increasing or decreasing applied current. The valving arrangement for process control was positioned remote from the housing and typical in-bed temperatures measured using thermocouples placed radially and axially are shown in Figure 2 (0.5 dm³ activated carbon fill product airflow 55 dm³ min⁻¹.

The conductive rod and vane heaters and housings utilise vane heating via an electric rod inserted centrally along the bed length with temperature control achieved via a remote current control device. Power consumption did not exceed 4.4kW. The rod and vane arrangement occupied approx 22% of the housing volume. Typical in-bed temperature profiles during heating and cooling obtained using thermocouples at sampling points SPO-SP5 shown in Figure 3 are shown in Figure 4 (6.8 dm³ zeolite fill, airflow rate 1400 dm³ min⁻¹). The valving arrangement for process control was positioned remote from the housing.

## Claims

1. A temperature swing adsorption gas filtration unit having a plurality of filter layers in series array and heaters located across the unit adjacent each of the filter layers and in supports therefor, and characterised by a heater control device arranged for independent control of the heaters, and by means for directing purging gas through the filters in a sense opposed to that of the subject gas being filtered.

2. A unit as claimed in claim 1 and characterised by being a pressure and temperature swing gas adsorption unit.

3. A unit as claimed in any on of claims 1 to 2 and characterised in that the heaters are Curie point heaters.

4. A unit as claimed in claim 3 and characterised in that the heaters are of honeycomb construction.

5. A unit as claimed in any one of claims 1 to stand characterised in that the heaters are mounted in supports for the filter beds.

6. A unit as claimed in any one of the preceding claims and characterised in that the heater control device is a microprocessor device.

7. A unit as claimed in any one of the preceding claims and characterised in that the filter beds comprise zeolite.

8. A method of regenerating a temperature swing adsorption filtration bed unit, the unit being as claimed in any one of the preceding claims, characterised in that a purge gas heated, whilst being passed through the filter layers in a direction opposite to that of the subject gas.

## Patentansprüche

1. Nach dem Temperaturwechseladsorptionsprinzip arbeitende Gasfiltrationseinheit mit mehreren Filterschichten in serieller Anordnung und auf der Einheit verteilten, neben jeder der Filterschichten und in deren Trägern angeordneten Heizeinrichtungen, gekennzeichnet durch eine Heizeinrichtungs-Steuervorrichtung zur unabhängigen Steuerung der Heizeinrichtungen und durch Mittel zum Hindurchleiten von Spülgas durch die Filter in einer der Richtung des betreffenden, der Filtration unterzogenen Gases entgegengesetzten Richtung.

2. Einheit nach Anspruch 1, dadurch gekennzeichnet, daß es sich um eine Druck- und Temperaturwechsel-Gasadsorptionseinheit handelt.

3. Einheit nach Anspruch 1 oder 2, dadurch gekennzeichnet, daß es sich bei den Heizeinrichtungen um Curiepunkt-Heizeinrichtungen handelt.

4. Einheit nach Anspruch 3, dadurch gekennzeichnet, daß die Heizeinrichtungen wabenartig aufgebaut sind.

5. Einheit nach einem der Ansprüche 1 bis 4, dadurch gekennzeichnet, daß die Heizeinrichtungen in Trägern für die Filterbetten befestigt sind.

6. Einheit nach einem der vorhergehenden Ansprüche, dadurch gekennzeichnet, daß es sich bei der Heizeinrichtungs-Steuervorrichtung um eine Mikroprozessorvorrichtung handelt.

7. Einheit nach einem der vorhergehenden Ansprüche, dadurch gekennzeichnet, daß die Filterbetten Zeolith enthalten.

8. Verfahren zur Regeneration einer Temperaturwechseladsorptionsfiltrationsbetteinheit nach einem der vorhergehenden Ansprüche, dadurch gekennzeichnet, daß man ein Spülgas während des Durchgangs durch die Filterschichten in einer der Richtung des betreffenden Gases entgegengesetzten Richtung erhitzt.

## Revendications

1. Unité de filtration de gaz à adsorption à température alternée, ayant une pluralité de couches de filtre dans un arrangement en série et d'appareils de chauffage situés sur l'ensemble de l'unité étant adjacent à chaque couche de filtre et fournissant un support à ces dernières, et caractérisée par un dispositif de contrôle de l'appareil de chauffage arrangé en vue d'un contrôle indépendant des appareils de chauffage, et par des moyens de direction du gaz de purge à travers les filtres dans une direction opposée à celle du gaz soumis au filtrage.

2. Unité selon la revendication 1, caractérisée par le fait d'être une unité d'adsorption de gaz à température et à pression alternées.

3. Unité selon l'une quelconque des revendications 1 à 2, caractérisée en ce que les appareils de chauffage sont des appareils à point de Curie.

4. Unité selon la revendication 3, caractérisée en ce que les appareils de chauffage ont une construction en nid d'abeille.

5. Unité selon l'une quelconque des revendications 1 à 4, caractérisée en ce que les appareils de chauffage sont montés dans des supports pour les lits de filtre.

6. Unité selon l'une quelconque des revendications précédentes, caractérisée en ce que le dispositif de contrôle des appareils de chauffage est un dispositif à microprocesseur.

7. Unité selon l'une quelconque des revendications précédentes et caractérisée en ce que les lits de filtre comprennent un zéolite.

8. Méthode de régénération d'une unité de lit de filtration à adsorption à température alternée, l'unité étant selon l'une quelconque des revendications précédentes, caractérisée en ce qu'un gaz de purge est chauffé tout en passant à travers les couches de filtre dans une direction opposée à celle du gaz soumis au traitement.
